## Europäisches Patentamt
### European Patent Office
### Office européen des brevets

(19)

(11) Veröffentlichungsnummer : **0 186 004**
**B1**

(12) **EUROPÄISCHE PATENTSCHRIFT**

(45) Veröffentlichungstag der Patentschrift :
23.11.89

(51) Int. Cl.⁴ : **H 04 Q   7/04, H 04 B   7/26**

(21) Anmeldenummer : 85115519.2

(22) Anmeldetag : 06.12.85

(54) Autotelefonsystem.

(30) Priorität : 10.12.84 DE 3444989

(43) Veröffentlichungstag der Anmeldung :
02.07.86 Patentblatt 86/27

(45) Bekanntmachung des Hinweises auf die Patenterteilung : 23.11.89 Patentblatt 89/47

(84) Benannte Vertragsstaaten :
AT BE CH DE FR GB IT LI LU NL SE

(56) Entgegenhaltungen :
EP--A-- 0 111 164
DE--A-- 2 659 570
US--A-- 4 355 411
IEEE TRANSACTIONS ON VEHICULAR TECHNOLOGY, Band VT-28, Nr. 2, Mai 1979, Seiten 132-139, IEEE, New York, US; J. D. LAST et al.: "Short-term phase stability of audio signals in mobile radio vehicle-base links"
29th IEEE VEHICULAR TECHNOLOGY CONFERENCE, 27.-30. März 1979, Seiten 245-252, New York, US; M.H. CALLENDAR et al.: "Network design for a full3 automatic wide area radiotelephone service"

(73) Patentinhaber : **Siemens Aktiengesellschaft
Wittelsbacherplatz 2
D-8000 München 2 (DE)**

(72) Erfinder : **Hofmann, Ludwig, Dipl.-Ing. (FH)
Jahnhöhe 60
D-8068 Hettenshausen (DE)**

EP 0 186 004 B1

**Beschreibung**

Die Erfindung bezieht sich auf eine Autotelefonsystem mit ortsfesten und mobilen Teilnehmerstationen im Großraum eines Funknetzes, das aus mehreren Funkkonzentratoren in einer gegenseitigen räumlichen Anordnung besteht.

Bei älteren Systemen werden relativ niedrige Frequenzen (VHF-Bereich) verwendet, die den Vorteil einer relativ großen Reichweite bieten. Solche Systeme, beispielsweise bekannt durch 29 th IEEE Vehicular Technology Conference, März 1979, Seiten 245 bis 252 (insbesondere Figur 1 mit zugehöriger Beschreibung auf Seite 245), New York, US ; H.H. Callendar et al : « Network design for a fully automatic wide area radiotelephone service », sind gut für ländliche Gegenden geeignet, erlauben jedoch nur relativ wenig Kanäle. Somit ist ein Zellularsystem in diesem Frequenzbereich nicht realisierbar.

Neuere Systeme, wie sie aus der vorstehend genannten Literaturstelle (vgl. Figur 2 und zugehörige Beschreibung) ebenfalls bekannt sind, verwenden Übertragungskanäle im UHF-Bereich. Diese bieten hohe Kanalkapazitäten bei einer verminderten Reichweite, wodurch sie für dichbesiedelte Gebiete geringerer Ausdehnung gut geeignet sind. Zur funkmäßigen Abdeckung ländlicher Bereiche sind aufgrund der geringen Reichweite sehr viele Feststationen zu errichten.

In der DE-A-2 659 570 wird ein Fernsprechsystem mit ortsfesten und mobilen Teilnehmerstationen im Großraum eines Funknetzes, das aus mehreren nach Art eines Zellularsystems angeordneten Funkkonzentratorbereichen mit sich überlappenden Funkbereichen besteht, beschrieben. Dabei sind im Gebiet besonders hoher Teilnehmerdichte diesen ersten Funkkonzentratorbereichen zweite Funkkonzentratorbereiche mit wesentlich größeren Bereichsradien und eigenen in diesen Bereichen noch nicht verwendeten Frequenzen überlagert. Den zweiten Funkkonzentratorbereichen sind diejenigen mobilen Teilnehmerstationen zugeordnet, die nur für einen Nachrichtenverkehr innerhalb dieses Funkkonzentratorbereichs bestimmt sind.

Ferner ist aus der EP-A-0 111 164 ein Funksystem bekannt, welches ein öffentliches Fernsprechnetz erweitert durch mobile Empfänger und durch Funkrufzentralen, die jeweils für eine Rufregion vorgesehen sind. Mit Hilfe einer Funkrufzentrale sind Rufaufträge, die mittelbar oder unmittelbar aus einem Fernsprechnetz kommen, als Ruftelegramme in ein Funknetz überleitbar, um dort die Aussendung eines Funkrufes auszulösen. Dabei ist für mehrere einander unmittelbar benachbarte und überlappende Sendegebiete dieselbe Sendefrequenz, genannt Landesfrequenz, für die Aussendung von Funkrufen benutzt, zu deren Entkopplung in Überlappungsbereichen unterschiedliche, zyklisch wiederkehrende Zeitschlitze in den einzelnen Sendegebieten vorgesehen sind. Zusätzlich kann in einem Sendegebiet eine zweite, speziell diesem Sendegebiet zugeordnete Sendefrequenz, genannt Heimatfrequenz, ausgesendet werden zur Aussendung von Funkrufen für solche Empfänger, die sich ständig nur in diesem Sendegebiet befinden. Zum Aussenden der Heimatfrequenz sind in einem Sendegebiet mehrere untereinander synchronisiert arbeitende Heimatsender, zum Aussenden der Landesfrequenz sind in den Sendegebieten mehrere untereinander synchronisiert arbeitende Landessender vorgesehen. Als Rufempfänger sind zwei Typen vorgesehen, nämlich ein als fest abgestimmter und nur zum Empfang einer Heimatfrequenz geeigneter Einkanalempfänger und ein Typ, der auch oder als fest abgestimmter Einkanalempfänger ausschließlich zum Empfang der Landesfrequenz geeignet ist.

Der Erfindung liegt die Aufgabe zugrunde, eine Lösung für ein einheitliches Funksystem zur Abdeckung eines verschieden stark bevölkerten Gebietes anzugeben.

Diese Aufgabe wird gemäß der Erfindung gelöst mit einem Autotelefonsystem aus zwei Funkteilen in den jeweiligen Funkeinrichtungen, von denen der eine im VHF-Bereich in dünnbesiedelten Gebieten aktiv ist und mit hoher Sendeleistung arbeitet und der andere im UHF-Bereich in dichtbesiedelten Gebieten aktiv ist und mit relativ kleiner Sendeleistung arbeitet, und durch eine beide Funkteile nach vorbestimmten Kriterien überwachende und im Bedarfsfall eine Umschaltung veranlassende Steuerung, die zugleich die Datensignalisierung zwischen Funkkonzentrator und Mobilstation veranlaßt.

Nachstehend wird die Erfindung noch näher erläutert.

Der Grundgedanke der Erfindung besteht darin, daß in dem Autotelefonsystem zwei Funkteile kombiniert sind. Die Funkbereiche dieser Funkteile liegen dabei im VHF- und im UHF-Band. Das Autotelefon besitzt jedoch lediglich eine Steuerung, die beide Funkbereiche bedient und die Datensignalisierung zwischen Funkkonzentrator und Mobilstation veranlaßt.

Der Funkteil im UHF-Bereich (zum Beispiel 900 MHz) kann mit einer relativ kleinen Leistung (ca. 1 W) arbeiten und ist für den Stadtbetrieb vorgesehen. Der Funkteil für den VHF-Bereich (zum Beispiel 80 MHz oder 160 MHz) ist zur Deckung der ländlichen Gebiete vorgesehen. Für ihn wird eine hohe Sendeleistung (ca. 15 W) benötigt. Die beide Funkteile überwachende Steuerung belegt nach Möglichkeit das erste Funkteil, d. h. Kanäle im UHF-Bereich. Hierbei befindet sich das Autotelefon im Stadtbereich. Durch diese Steuerung wird gewährleistet, daß die niederfrequenten Kanäle, von denen lediglich wenige vorhanden sind, auch nur dann belegt werden, wenn keine hochfrequenten Kanäle (UHF-Bereich) belegbar sind. Das Autotelefon befindet sich hierbei im ländlichen Bereich. Die Umschaltung kann dabei auch während eines Gesprächs vollzogen werden.

**Patentanspruch**

Autotelefonsystem mit ortsfesten und mobilen Teilnehmerstationen im Großraum eines Funknetzes, das aus mehreren Funkkonzentratoren in einer gegenseitigen räumlichen Anordnung besteht, gekennzeichnet durch zwei Funkteile in den jeweiligen Funkeinrichtungen, von denen der eine im VHF-Bereich in dünnbesiedelten Gebieten aktiv ist und mit hoher Sendeleistung arbeitet und der andere im UHF-Bereich in dichtbesiedelten Gebieten aktiv ist und mit relativ kleiner Sendeleistung arbeitet, und durch eine beide Funkteile nach vorbestimmten Kriterien überwachende und im Bedarfsfall eine Umschaltung veranlassende Steuerung, die zugleich die Datensignalisierung zwischen Funkkonzentrator und Mobilstation veranlaßt.

**Claim**

Mobile telephone system with stationary and mobile subscriber stations in the wide area of a land mobile network, consisting of a plurality of base stations in a mutual spatial arrangement, characterized by two radio sections in the respective radio equipment, of which one is active in the VHF region in thinly populated areas and works with a high transmitting power, and the other is active in the UHF range in densely populated areas and works with a relatively low transmitting power, and by a controller which monitors both radio sections according to predetermined criteria and activates a switch-over when necessary, and which at the same time activates the data signalling between base station and mobile station.

**Revendication**

Système de téléphone de voiture comprenant des postes d'abonnés fixes et mobiles dans la zone géographique étendue d'un réseau radioélectrique formé de plusieurs concentrateurs radioélectriques dans une certaine disposition spatiale mutuelle, caractérisé par deux parties radioélectriques dans les équipements radioélectriques utilisés, dont l'une est active en bande VHF dans des zones faiblement peuplées et fonctionne avec une grande puissance d'émission et dont l'autre est active en bande UHF dans les zones à forte densité de population et fonctionne avec une puissance d'émission relativement petite, ainsi que par une commande surveillant les deux parties radioélectriques selon des critères préfixés et provoquant en cas de besoin une commutation, commande qui assure en même temps la signalisation de données entre le concentrateur radioélectrique et le poste mobile.